# EUROPÄISCHE PATENTSCHRIFT

(11) **EP 1 376 918 B1**
(45) Veröffentlichungstag und Bekanntmachung des Hinweises auf die Patenterteilung: **29.09.2004**
(21) Anmeldenummer: 02360188.3
(22) Anmeldetag: 24.06.2002
(51) Int. Cl.: H04J 14/02

(54) **Vorrichtung für ein passives optisches Netzwerk**
Apparatus for a passive optical network
Appareil pour un réseau optique passif

(43) Veröffentlichungstag der Anmeldung: 02.01.2004
(73) Patentinhaber: ALCATEL, 75008 Paris (FR)
(72) Erfinder: Pfeiffer, Thomas Dr., 70569 Stuttgart (DE)
(74) Vertreter: Menzietti, Domenico, Dipl.-Ing

(56) Entgegenhaltungen:
- US-A- 5 510 917
- US-A- 6 058 229
- US-A1- 2001 026 384
- US-A1- 2002 067 523
- US-B1- 6 178 025
- CHLAMTAC I ET AL: "Scalable WDM network architecture based on photonic slot routing and switched delay lines" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7. April 1997 (1997-04-07), Seiten 769-776, XP010252079 ISBN: 0-8186-7780-5

## Beschreibung

Die Erfindung betrifft eine Vorrichtung für ein passives optisches Netzwerk.

Passive optische Netzwerke sind zumeist aus mindestens einer Zentrale, dem sog. central office und einer Vielzahl von passiven optischen Knoten aufgebaut. Die Knoten sind mit der oder den Zentralen über optische Leitungen miteinander verschaltet. Dazu können verschiedene Netzwerktopologien, z.B. Stern-, Ringnetz, Baumstruktur, etc. verwendet werden. Zur Minimierung von Ausfällen wird jeder Knoten über mindestens zwei verschiedene optische Leitungen mit einer Zentrale verbunden. Über einen Hauptpfad werden optische Signale zu den Knoten übertragen. Tritt im Hauptpfad eine Störung auf, z.B. Kabelbruch, so werden die optische Signale zu den Knoten über einen Reservepfad übertragen. Ist die Störung behoben, wird auf den Hauptpfad zurückgeschaltet und die optischen Signale werden wieder über den Hauptpfad zu den Knoten übertragen.

Eine Lösungsmöglichkeit zur Realisierung dieser Umschaltung ist in EP0973288 offenbart. Diese sieht in jedem Knoten einen elektrischen Schalter vor, der angesteuert wird durch einen Detektor und ggf. einer Steuereinrichtung und vom Hauptpfad auf den Reservepfad umgeschaltet wird im Falle einer Störung im Hauptpfad. Ein optischer Koppler ist vorgesehen, der beispielsweise 10% des empfangenen Signalpegels aus der Hauptleitung auskoppelt und an den Detektor weiterleitet, der beispielsweise als Schwellenwertdetektor oder Komparator ausgebildet ist. Die Steuereinrichtung benötigt eine Spannungsversorgung, die durch lokale Speisung bereitgestellt wird.

In US 2001/0026384 A1 ist ein optisches Netzwerk offenbart, das einen optischen Schalter zum Schalten zwischen einem optischen Hauptpfad und einem optischen Reservepfad beinhaltet. Ferner wird für Überwachungszwecke ein Überwachungssignal in einem Wellenlängenbereich übertragen, der außerhalb des Wellenlängenbereichs liegt, der für die Übertragung der Nutzinformationen dient.

In IEEE Comput. Soc, US, 7. April 1997, Seiten 769-776, XP010252079 ISBN: 0-81867780-5 ist eine skalierbare WDM Netzwerkarchitektur offenbart, die in einem Knoten einen Schalter beinhaltet, der über eine elektronische Schaltungslogik angesteuert wird. Es ist ein optischer Koppler und eine Photodiode vorgesehen, um empfangene Datenpakete zu detektieren und die Information darüber der Schaltungslogik zu übermitteln, die daraufhin den Schalter entsprechend steuert.

In US 6,178,025 B1 ist ein optisches Netzwerk offenbart, das einen Detektor und eine Steuerschaltung beinhaltet, um einen optischen Schalter im Fehlerfall vom Arbeitskanal auf den Stand-by-Kanal schalten zu können.

In US 5,510,917 offenbart ein WDM-Netzwerk, das einen Schalter beinhaltet, mittels dessen im Fehlerfall zwischen einer Route A und einer Route B geschaltet wird.

Aufgabe der Erfindung ist es, eine alternative Lösungsmöglichkeit für die Realisierung der Umschaltung bereitzustellen.

Gelöst wird diese Aufgabe durch eine Vorrichtung gemäß Patentanspruch 1. Die erfindungsgemäße Vorrichtung zeichnet sich insbesondere dadurch aus, dass eine zusätzliches Signal vorgesehen ist, das bei einer Wellenlänge übertragen wird, die außerhalb des für die Übertragung von optischen Nutzsignalen im Hauptpfad verwendeten Wellenlängenbereichs liegt, und das dazu verwendet wird, eine elektrische Schaltung innerhalb der Vorrichtung zu speisen, die wiederum einen Schalter steuert, der zwischen Haupt- und Reservepfad umschaltet.

Im Falle einer Störung im Hauptpfad, z.B. ein Kabelbruch wird kein Nutzsignal mehr in der Vorrichtung, die sich in einem Knoten des passiven optischen Netzwerks befindet, empfangen. Gleichzeitig wird auch kein zusätzliches Signal mehr im Knoten empfangen. Die elektrische Schaltung wird nicht mehr gespeist und infolgedessen gelangt auch kein Steuersignal mehr zum Schalter. Dieser geht dann automatisch in seine Alternativ-Stellung, die durch ein Verbinden des Knotens mit dem Reservepfad gekennzeichnet ist. Der Knoten empfängt sodann Nutzsignale über den Reservepfad. Nach Beheben der Störung wird die elektrische Schaltung durch das wieder bereitgestellte zusätzliche Signal gespeist, erhält somit Energie und steuert den Schalter derart, dass er den Knoten mit dem Hauptpfad verbindet. Auf diese Art und Weise ist eine passive Vorrichtung geschaffen, die keine lokale Stromversorgung benötigt. Die Vorrichtung ist kostengünstig aufgebaut und ermöglicht passive Knoten ohne lokale Stromversorgung wodurch auf Grund der hohen Anzahl von Knoten in einem optischen Netzwerk auch kostengünstige optische Netzwerke realisierbar sind. Die Vorrichtung ist zudem kompakt aufgebaut, benötigt wenige Bauteile und hat keinen störenden Einfluss auf die Nutzsignalübertragung. Durch die Trennung der Wellenlängenbereiche in denen Nutzsignale und zusätzliches Signal übertragen werden ist ein gegenseitiges Beeinflussen minimiert und in dem optimierten Übertragungsfenster für die Nutzsignale die Übertragungskapazität maximiert. Die Nutzsignale werden ferner durch die Verwendung eines optischen Schalters bei der Weiterschaltung praktisch nicht beeinflusst. Es besteht zudem auf Grund der Übertragung über dieselbe optische Leitung ein direkter Zusammenhang zwischen dem empfangenen Signalpegel der Nutzsignale und dem Signalpegel des zusätzlichen Signals, so dass die Qualität des Empfangs des zusätzliches Signals einen guten Indikator für die Qualität des Empfangs des Nutzsignale darstellt. Dies kann in vorteilhafter Weise zur Festlegung einer Schwelle verwendet werden, ab der eine Umschaltung auf den Reservepfad durchgeführt werden soll; beispielsweise wird bei einer Störung des Hauptpfads ab einem vorbestimmten dB-Wert automatisch eine Umschaltung durchgeführt.

Vorteilhafte Ausgestaltungen sind den abhängigen Ansprüchen und der nachfolgenden Beschreibung zu entnehmen.

Im folgenden wird ein Ausführungsbeispiel der Erfindung unter Zuhilfenahme von zwei Figuren erläutert. Es zeigen:
- Fig. 1: eine schematische Darstellung eines erfindungsgemäßen optischen Netzwerks und
- Fig. 2: einen schematisch dargestellten Aufbau einer erfindungsgemäßen Vorrichtung.

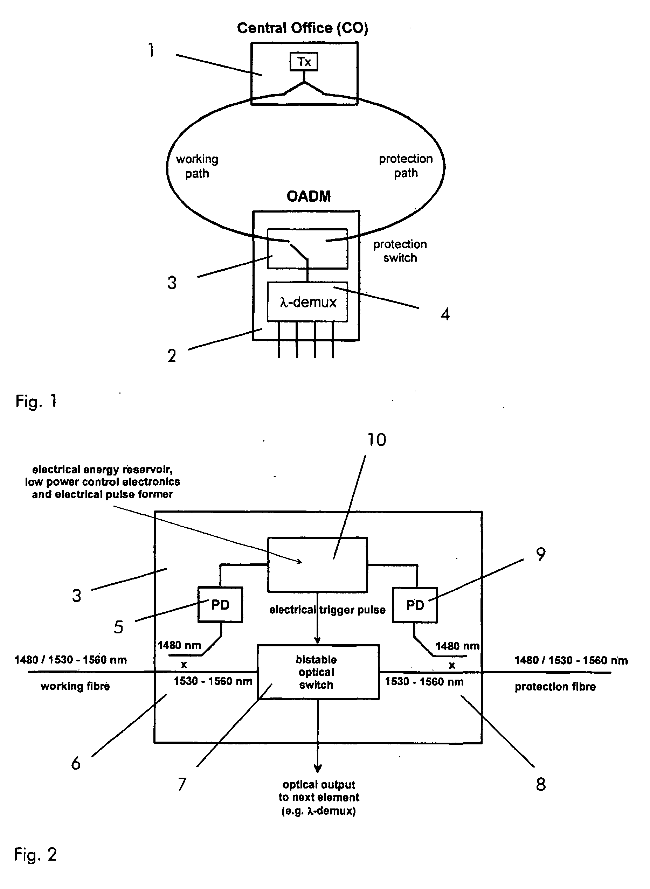

Das Ausführungsbeispiel wird nun zunächst unter Zuhilfenahme von Fig. 1 erläutert. Fig. 1 zeigt ein erfindungsgemäßes optisches Netzwerk.

Ein passives optisches Netzwerk ist aus mindestens einer Zentrale und einer Vielzahl von Knoten aufgebaut, die auf unterschiedlichste Art und Weise miteinander verschaltet sein könne, z.B. als Stern-, Ring- oder Baumnetz. In Fig. 1 ist beispielhaft eine Zentrale 1 und ein Knoten 2 dargestellt. Der Knoten 2 ist beispielhaft als optischer Add-Drop-Multiplexer ausgeführt, kann alternativ aber auch aus anderen Elementen aufgebaut sein, z.B. optischer Cross-Connect, optischer Splitter, etc. Zentrale 1 und Knoten 2 sind über einen Hauptpfad und einen Reservepfad miteinander verbunden. Optische Nutzsignale werden in der Zentrale 1 generiert und über den aus mindestens einer optisches Leitung aufgebauten optischen Hauptpfad zum Knoten 2 übertragen. Hauptpfad und Reservepfad können jeweils als unidirektionale Verbindung oder als bidirektionale ausgeführt sein. Der Knoten 2 beinhaltet eine Vorrichtung zum Schalten zwischen Hauptpfad und Reservepfad. Wenn auf dem Hauptpfad eine Störung auftritt, die dazu führt, dass im Knoten 2 keine oder eine zu geringe optische Leistung gemessen wird, schaltet die Vorrichtung auf den Reservepfad. Optische Nutzsignale werden beispielhaft zeitlich parallel in Haupt- und Reservepfad ausgesendet. Dies hat den Vorteil, dass bei einer Umschaltung auf den Reservepfad die optischen Nutzsignale ohne zeitliche Unterbrechung empfangen werden können und den Nachteil, dass im Falle keiner Störung der Hauptleitung Redundanz im Netzwerk übertragen wird, die die Übertragungskapazität im Netzwerk reduziert. Alternativ werden optische Nutzsignale nur im Falle einer Störung über die Reserveleitung ausgesandt. Dies hat den Vorteil, dass weniger Signalleistung benötigt wird, der Reservepfad für die Übertragung zusätzlicher Nutzsignale genutzt werden kann und den Nachteil, dass eine kurze Zeitverzögerung bei der Umschaltung auf den Reservepfad auftritt, da die Aussendung der optischen Nutzsignale über den Reservepfad erst nach Informieren der Zentrale 1 durch den Knoten 2 erfolgen kann.

Bei einem passiven optischen Netzwerk ist es vorteilhaft, wenn jeder Knoten rein passiven Elementen enthält, die selbst keine Stromversorgung benötigen. Dies erspart Betriebs- und Wartungskosten und ermöglicht Knoten beliebig zu platzieren, insbesondere auch dort, wo keine lokale Stromversorgung vorhanden ist. Zudem verbilligen sich die Herstellungskosten der Knoten. Jeder Knoten 2 beinhaltet beispielsweise einen Wellenlängen-Demultiplexer 4. Dieser ist z.B. aufgebaut aus wellenlängenselektiven Filtern. Diese sind rein passiv und benötigen keine Energieversorgung. Der Betrieb des passiven optischen Netzwerks ist somit unabhängig vom Stromversorgungsnetz. Es sind keine Schutzmechanismen gegen einen Ausfall des Stromversorgungsnetzes oder Leistungsschwankungen im Stromversorgungsnetz vorzusehen.

Das erfindungsgemäße optische Netzwerk ist derart ausgestaltet, dass es im Hauptpfad zusammen mit den optischen Nutzsignalen ein zusätzliches optisches Signal überträgt, das Energie für die erfindungsgemäße Vorrichtung liefert und als Kriterium für den Empfang dient. Das zusätzliche Signal wird in einem anderen Wellenlängenbereich als die optischen Nutzsignale übertragen, wodurch ein gegenseitiges Beeinflussen minimiert und in dem optimierten Übertragungsfenster für die Nutzsignale die Übertragungskapazität maximiert wird.

Das Ausführungsbeispiel wird nun weiter unter Zuhilfenahme von Fig. 2 erläutert. Fig. 2 zeigt eine erfindungsgemäße Vorrichtung.

Die Vorrichtung 3 für ein passives optisches Netzwerk beinhaltet einen bistabilen optischen Schalter 7 zum Schalten zwischen einem optischen Hauptpfad und einem optischen Reservepfad. Der Schalter 7 ist derart ausgestaltet, dass er durch eine ferngespeiste elektrische Schaltung 10 ansteuerbar ist, wobei die Speisung zugeführt wird über ein zusätzliches, im Hauptpfad übertragenes optisches Signal, das bei einer Wellenlänge übertragen wird, die außerhalb des für die Übertragung von optischen Nutzsignalen im Hauptpfad verwendeten Wellenlängenbereichs liegt. In der Vorrichtung 3 findet eine optisch/elektrische Umsetzung statt. Das generierte elektrische Signal wird der elektrischen Schaltung 10 zugeführt. Die Vorrichtung 3 beinhaltet ferner einen mit dem Hauptpfad verbundenen optischen Wellenlängenkoppler 6 zum Auskoppeln des zusätzlichen optischen Signals und eine mit dem optischen Wellenlängenkoppler 6 verbundene Photodiode 5.

Die elektrische Schaltung 10 beinhaltet ein Energiereservoir, das durch die Ausgangssignale der Photodiode 5 aufgeladen wird. Das Energiereservoir beinhaltet einen Kondensator oder eine wiederaufladbare Batterie oder einen Akkumulator.

Die elektrische Schaltung 10 beinhaltet in einer vorteilhaften Ausgestaltung einen Schwellwertdetektor, um das Ausgangssignal der Photodiode 5 zu überwachen und ein Steuersignal zum Schalter 7 zu senden zwecks Umschalten des Schalters 7 auf den Reservepfad für den Fall, dass der von der Photodiode 5 empfangene Signalpegel unterhalb des Schwellwerts liegt.

In einer weiteren vorteilhaften Ausgestaltung der Erfindung wird die Speisung der elektrischen Schaltung 10 ferner zugeführt über ein weiteres zusätzliches, im Reservepfad übertragenes optisches Signal, das bei einer Wellenlänge übertragen wird, die außerhalb des für die Übertragung von optischen Nutzsignalen im Reservepfad verwendeten Wellenlängenbereichs liegt. Des weiteren ist ein weiterer, mit dem Reservepfad verbundener optischer Wellenlängenkoppler 8 zum Auskoppeln des weiteren zusätzlichen optischen Signals und eine mit dem weiteren optischen Wellenlängenkoppler 8 verbundene weitere Photodiode 9 vorgesehen.

Die elektrische Schaltung 10 beinhaltet dann z.B. einen Vergleicher, um die Ausgangssignale der Photodioden 5, 9 miteinander zu vergleichen und ein Steuersignal zum Schalter 7 zu senden zwecks Umschalten des Schalters 7 auf denjenigen Pfad, über den ein höherer Signalpegel empfangen wird. Der Vergleicher ist z.B. als Komparator ausgeführt. Ist der empfangene Signalpegel der mit dem Hauptpfad verbundenen Photodiode 5 höher als der empfangene Signalpegel der mit dem Reservepfad verbundenen Photodiode 9, so wird ein elektrischer Trigger-Impuls generiert, der den Schalter 7 derart ansteuert, dass das der Vorrichtung 3 nachfolgende Element des Knotens mit dem Hauptpfad verbunden wird. Ist er niedriger, so wird ein elektrischer Trigger-Impuls generiert, der den Schalter 7 derart ansteuert, dass das der Vorrichtung 3 nachfolgende Element des Knotens mit dem Reservepfad verbunden wird. Alternativ beinhaltet die elektrische Schaltung 10 z.B. zwei Vergleicher, um die Ausgangssignale der Photodioden 5, 9 mit unterschiedlichen Schwellwerten zu vergleichen. Bevorzugt wird das Signal des Hauptpfads durchgeschaltet. Erst wenn dieses unter einen vorgegebenen Schwellwert abfällt, wird das Reservepfadsignal durchgeschaltet. Gegebenenfalls wird alternativ oder zusätzlich eine Gewichtung dahingehend durchgeführt, welches Signal einen größeren Abstand zu dem jeweiligen Schwellwert hat und daher einen höheren Signal-zu-Rausch Verhältnis aufweist. Dasjenige Signal mit höherem Signal-zu-Rausch Verhältnis wird dann durchgeschaltet. Vorübergehende Schwankungen im Speisesignal können durch das Energiereservoir überbrückt werden, indem nicht die Ausgangssignale der Photodioden 5, 9 direkt miteinander verglichen werden, sondern die zugehörigen Energiereservoirs.

Bei einer weiteren bevorzugten Variante wird anstelle eines sogenannten Latching-Schalters, welcher bistabil einrastet, ein sogenannter Non-Latching-Schalter verwendet, welcher mittels einer Spannung in einer Stellung gehalten wird und bei Nichtvorliegen der Spannung selbstständig in die andere Stellung übergeht. Als Default-Stellung wird der Reservepfad gewählt. Wird über den Hauptpfad ein Speisesignal empfangen, so wird eine Spannung generiert, die den Schalter in der Non-Default-Stellung hält und den Hauptpfad durchschaltet. Wird über den Hauptpfad kein Speisesignal empfangen oder ein zu geringes, so wird keine Spannung generiert, die den Schalter in der Non-Default-Stellung halten könnte. Infolgedessen schaltet der Schalter selbständig auf die Default-Stellung und somit auf den Reservepfad um. Vorübergehende Schwankungen im Speisesignal werden durch das Energiereservoir überbrückt. Als Latching-Schalter wird z.B. ein micromechanischer Schalter verwendet, z.B. sogenannter MEMS-Switch, MEMS = Micro Electro Mechanical System.

Die Nutzsignale werden jeweils im Wellenlängenbereich von 1500 nm bis 1600 nm und die zusätzlichen optischen Signale jeweils im Wellenlängenbereich von 1400 nm bis 1500 nm übertragen. In einer bevorzugten Ausgestaltung werden die Nutzsignale im Wellenlängenbereich 1530 nm bis 1560 nm übertragen und die zusätzlichen Signale im Bereich um 1480 nm. Insbesondere für 1480 nm stehen Halbleiterlaser mit hoher Leistung zur Verfügung. Zudem sind die Verluste bei optischen Glasfaserleitungen in diesem Bereich gering. Mit einer optischen Leistung von wenigen mW- bereitgestellt an der erfindungsgemäßen Vorrichtung - ist es möglich, die elektrische Schaltung der Vorrichtung mit Strom zu versorgen. Die elektrische Schaltung ist bevorzugt im low power design, d.h. mit möglichst geringem Stromverbrauch ausgeführt. Auch der bistabile optische Schalter benötigt nur einen elektrischen Trigger-Impuls für's Schalten, aber keine stete Stromzufuhr, um den Schalter in der gewählten Stellung zu halten.

## Patentansprüche

1. Vorrichtung (3) für ein passives optisches Netzwerk, beinhaltend einen optischen Schalter (7) zum Schalten zwischen einem optischen Hauptpfad und einem optischen Reservepfad, wobei der Schalter (7) derart ausgestaltet ist, dass er durch eine ferngespeiste elektrische Schaltung (10) ansteuerbar ist, wobei die Speisung zugeführt wird über ein zusätzliches, im Hauptpfad übertragenes optisches Signal, das bei einer Wellenlänge übertragen wird, die außerhalb des für die Übertragung von optischen Nutzsignalen im Hauptpfad verwendeten Wellenlängenbereichs liegt, einen mit dem Hauptpfad verbundenen optischen Wellenlängenkoppler (6) zum Auskoppeln des zusätzlichen optischen Signals und eine mit dem optischen Wellenlängenkoppler (6) verbundene Photodiode (5), und wobei die elektrische Schaltung (10) ein Energiereservoir beinhaltet, wobei die Photodiode (5) derart mit der elektrischen Schaltung (10) verbunden ist, dass durch die Ausgangssignale der Photodiode(5) das Energiereservoir aufgeladen wird.

2. Vorrichtung (3) nach Anspruch 1, **dadurch gekennzeichnet, dass** das Energiereservoir einen Kondensator oder eine wiederaufladbare Batterie oder einen Akkumulator beinhaltet.

3. Vorrichtung (3) nach Anspruch 1, **dadurch gekennzeichnet, dass** die elektrische Schaltung (10) einen Schwellwertdetektor beinhaltet, um das Ausgangssignal der Photodiode (5) zu überwachen und ein Steuersignal zum Schalter (7) zu senden zwecks Umschalten des Schalters (7) auf den Reservepfad für den Fall, dass der von der Photodiode (5) empfangene Signalpegel unterhalb des Schwellwerts liegt.

4. Vorrichtung (3) nach Anspruch 1, **dadurch gekennzeichnet, dass** die Speisung der elektrischen Schaltung (10) ferner zugeführt wird über ein weiteres zusätzliches, im Reservepfad übertragenes optisches Signal, das bei einer Wellenlänge übertragen wird, die außerhalb des für die Übertragung von optischen Nutzsignalen im Reservepfad verwendeten Wellenlängenbereichs liegt, einen weiteren, mit dem Reservepfad verbundenen optischen Wellenlängenkoppler (8) zum Auskoppeln des weiteren zusätzlichen optischen Signals und eine mit dem weiteren optischen Wellenlängenkoppler (8) verbundene weitere Photodiode (9).

5. Vorrichtung (3) nach Anspruch 4, **dadurch gekennzeichnet, dass** die elektrische Schaltung (10) einen Vergleicher beinhaltet, um die Ausgangssignale der Photodioden (5, 9) miteinander zu vergleichen und ein Steuersignal zum Schalter (7) zu senden zwecks Umschalten des Schalters (7) auf denjenigen Pfad, über den ein höherer Signalpegel empfangen wird.

6. Vorrichtung (3) nach Anspruch 1, **dadurch gekennzeichnet, dass** die Nutzsignale jeweils im Wellenlängenbereich von 1500 nm bis 1600 nm und die zusätzlichen optischen Signale jeweils im Wellenlängenbereich von 1400 nm bis 1500 nm übertragen werden.

## Claims

1. A device (3) for a passive optical network, comprising an optical switch (7) for switching between a main optical path and a reserve optical path, wherein the switch (7) is designed to be controllable by a remotely powered electric circuit (10), the power being supplied via an additional optical signal which is transmitted over the main path at a wavelength lying outside the wavelength range used for the transmission of useful optical signals over the main path, via a wavelength-selective optical coupler (6) connected to the main path for extracting the additional optical signal, and via a photodiode (5) connected to the wavelength-selective optical coupler (6), the electric circuit (10) comprising an energy reservoir, and the photodiode (5) being connected to the electric circuit (10) so that the energy reservoir is charged by the output signals of the photodiode (5).

2. A device (3) as set forth in claim 1, **characterized in that** the energy reservoir comprises a capacitor or a rechargeable battery or a storage battery.

3. A device (3) as set forth in claim 1, **characterized in that** the electric circuit (10) comprises a threshold detector for monitoring the output signal of the photodiode (5) and for sending a control signal to the switch (7) for the purpose of connecting the switch (7) to the reserve path if the signal level received by the photodiode (5) lies below the threshold.

4. A device (3) as set forth in claim 1, **characterized in that** the power is also supplied to the electric circuit (10) via a further additional optical signal which is transmitted over the reserve path at a wavelength lying outside the wavelength range used for the transmission of useful optical signals over the reserve path, via a further wavelength-selective coupler (8) connected to the reserve path for extracting the further additional optical signal, and via a further photodiode (9) connected to the further wavelength-selective optical coupler (9).

5. A device (3) as set forth in claim 4, **characterized in that** the electric circuit (10) comprises a comparator for comparing the output signals of the photodiodes (5, 9) and for sending a control signal to the switch (7) for the purpose of connecting the switch (7) to the path over which a higher signal level is being received.

6. A device (3) as set forth in claim 1, **characterized in that** the useful signals are transmitted in the wavelength range of 1500 to 1600 nm, and that the additional optical signals are transmitted in the wavelength range of 1400 to 1500 nm.

## Revendications

1. Dispositif (3) pour un réseau optique passif, comprenant un commutateur optique (7) pour commuter entre un chemin optique principal et un chemin optique de secours, dans lequel le commutateur (7) est configuré de telle sorte qu'il peut être piloté par un circuit électrique (10) alimenté à distance, l'alimentation est amenée par l'intermédiaire d'un signal optique supplémentaire, transmis sur le chemin principal, le signal étant transmis à une longueur d'onde qui se trouve en dehors de la gamme d'ondes utilisée pour la transmission de signaux optiques utiles sur le chemin principal, un coupleur optique de longueur d'onde (6) relié au chemin principal pour prélever le signal optique supplémentaire et une photodiode (5) reliée au coupleur optique de longueur d'onde (6), et dans lequel le circuit électrique (10) comprend une réserve d'énergie, la photodiode (5) étant reliée au circuit électrique (10), de telle sorte que les signaux de sortie de la photodiode (5) chargent la réserve d'énergie.

2. Dispositif (3) selon la revendication 1, **caractérisé en ce que** la réserve d'énergie comprend un condensateur ou une batterie rechargeable ou un accumulateur.

3. Dispositif (3) selon la revendication 1, **caractérisé en ce que** le circuit électrique (10) comprend un détecteur de valeur de seuil pour surveiller le signal de sortie de la photodiode (5) et envoyer un signal de commande au commutateur (7) pour commuter le commutateur (7) sur le chemin de secours au cas où le niveau de signal reçu par la photodiode (5) se trouverait au-dessous de la valeur de seuil.

4. Dispositif (3) selon la revendication 1, **caractérisé en ce que** l'alimentation du circuit électrique (10) est en outre amenée par l'intermédiaire d'un autre signal optique supplémentaire, transmis sur le chemin de secours, le signal étant transmis à une longueur d'onde qui se trouve en dehors de la gamme d'ondes utilisée pour la transmission de signaux optiques utiles sur le chemin de secours, et par un autre coupleur optique de longueur d'onde (8), relié au chemin de secours, pour prélever l'autre signal optique supplémentaire, et une autre photodiode (9) reliée à l'autre coupleur optique de longueur d'onde (8).

5. Dispositif (3) selon la revendication 4, **caractérisé en ce que** le circuit électrique (10) comprend un comparateur pour comparer les signaux de sortie des photodiodes (5, 9) et envoyer un signal de commande au commutateur (7) pour commuter le commutateur (7) sur celui des chemins à travers lequel un niveau de signal supérieur est reçu.

6. Dispositif (3) selon la revendication 1, **caractérisé en ce que** les signaux utiles sont transmis respectivement dans la gamme d'ondes de 1500 nm à 1600 nm et les signaux optiques supplémentaires sont transmis respectivement dans la gamme d'ondes de 1400 nm à 1500 nm.
